# FASCICULE DE BREVET EUROPEEN

(11) **EP 4 085 191 B1**
(45) Date de publication et mention de la délivrance du brevet: **15.05.2024**
(21) Numéro de dépôt: 20839132.6
(22) Date de dépôt: 30.12.2020
(51) Int. Cl.: F02M 25/022

(54) **SYTÈME ET PROCÉDÉ D'INJECTION D'UNE SOLUTION AQUEUSE DANS UN MOTEUR À INJECTION**
SYSTEM UND VERFAHREN ZUM EINSPRITZEN EINER WÄSSRIGEN LÖSUNG IN EINEN KRAFTSTOFFEINSPRITZMOTOR
SYSTEM AND METHOD FOR INJECTING AN AQUEOUS SOLUTION INTO A FUEL-INJECTED ENGINE

(30) Priorité: 31.12.2019 FR 1915779
(43) Date de publication de la demande: 09.11.2022
(73) Titulaire: Plastic Omnium Advanced Innovation And Research, 1130 Bruxelles (BE)
(72) Inventeur: MONGE-BONINI, Beatriz, 1130 BRUXELLES (BE); OP DE BEECK, Joël, 1130 BRUXELLES (BE); DUEZ, Laurent, 1130 BRUXELLES (BE)
(74) Mandataire: LLR
(86) Numéro de dépôt international: PCT/EP2020/088052
(87) Numéro de publication internationale: WO 2021/136817

(56) Documents cités:
- EP-A1- 2 208 879
- US-A1- 2018 274 488
- US-A1- 2019 257 270

## Description

### Domaine technique de l'invention

L'invention concerne un système d'injection d'une solution aqueuse dans un moteur à injection pour véhicule automobile et un procédé de purge d'une solution aqueuse dans un système d'injection de la solution aqueuse dans un moteur à injection pour véhicule automobile. Plus particulièrement, l'invention concerne un système d'injection d'une solution aqueuse dans un moteur à injection pour véhicule automobile comprenant un moyen de décontamination de la solution aqueuse purgée.

L'invention peut être utilisée notamment à bord des véhicules automobiles comprenant un moteur à injection, plus particulièrement à bord des véhicules automobile comprenant un moteur essence turbocompressé à injection directe.

### Arrière-plan technique de l'invention

La demande de brevet français FR3081923 A1 déposée au nom de la demanderesse, propose un système d'injection d'une solution aqueuse dans un moteur à injection pour véhicule automobile, comprenant un réservoir et un moyen d'injection de la solution aqueuse dans une conduite connectant le réservoir à au moins un injecteur du moteur à injection, la conduite comprenant un moyen de déminéralisation de la solution aqueuse. Cette demande propose également de purger la conduite afin de protéger le au moins un injecteur et la conduite en cas de gel. Dans le système d'injection proposé par cette demande antérieure, la solution aqueuse purgée est renvoyée dans le réservoir, ce qui peut contaminer le réservoir et son contenu. En effet, la solution aqueuse qui revient du ou des injecteurs peut être contaminée par des polluants biologiques (air) et organiques (essence, gaz brulés, lubrifiant) pour lesquels le moyen de déminéralisation est inefficace.

La demande de brevet allemand DE102017218172 A1 propose d'éviter de contaminer le réservoir et son contenu en ne renvoyant pas la solution aqueuse contaminée dans le réservoir mais directement dans l'environnement ou dans un récipient de collecte indépendant. Cette solution n'est pas satisfaisante car, dans un cas, elle pollue l'environnement, dans un autre cas, elle nécessite de fournir un récipient de collecte indépendant. Des systèmes d'injection d'une solution aqueuse dans un moteur à injection sont connus des documents US 2018/274488 A1, EP 2 208 879 A1 et US 2019/257270 A1.

### Résumé de l'invention

L'invention a notamment pour objectif de pallier ces inconvénients de l'art antérieur. A cet effet, l'invention a pour objet un système d'injection d'une solution aqueuse dans un moteur à injection pour véhicule automobile comprenant :
- un réservoir d'une solution aqueuse,
- une première pompe configurée pour transférer à travers une ligne d'injection, de la solution aqueuse du réservoir à au moins un injecteur du moteur à injection,
- une seconde pompe configurée pour transférer à travers une ligne de purge, de la solution aqueuse d'au moins un injecteur du moteur à injection au réservoir,
- un moyen de décontamination configuré pour décontaminer la solution aqueuse traversant la ligne de purge, ledit moyen de décontamination comprenant un premier décontaminant apte à éliminer les polluants organiques présents dans la solution aqueuse purgée.

Grâce à l'invention, la solution aqueuse purgée est décontaminée de ses polluants organiques ce qui permet de renvoyer la solution aqueuse purgée dans le réservoir sans risquer de contaminer le réservoir et son contenu.

Par l'expression « solution aqueuse », on entend désigner de l'eau ayant des caractéristiques (ou propriétés) physico-chimiques quelconques.

Selon des caractéristiques additionnelles de l'invention :
- le moyen de décontamination comprend un deuxième décontaminant apte à éliminer les polluants inorganiques présents dans la solution aqueuse purgée. Ceci permet de décontaminer la solution aqueuse purgée de ses éventuels polluants inorganiques avant de la renvoyer dans le réservoir.
- le moyen de décontamination comprend un seul décontaminant, à savoir ledit premier décontaminant. Cette variante de l'invention est particulièrement adaptée pour les systèmes d'injection dont on sait que seule une pollution organique est à prendre en considération. En effet, quand la solution aqueuse injectée dans le moteur à injection est une solution aqueuse préalablement décontaminée de ses polluants inorganiques, par exemple de l'eau déminéralisée du commerce, il est peu probable que la solution aqueuse purgée soit contaminée par des polluants inorganiques au retour du moteur à injection. Ainsi, quand le réservoir est rempli avec de l'eau déminéralisée du commerce, seul le premier décontaminant est utile. Ceci est également vrai quand le réservoir est rempli avec de l'eau non-déminéralisée dès lors qu'un moyen de déminéralisation est prévu pour déminéraliser l'eau dans le réservoir ou dans la ligne d'injection.
- le premier décontaminant contient un adsorbant choisi dans le groupe constitué par une résine adsorbante, une résine anionique, un charbon actif et toute combinaison de ces adsorbants.

Dans un exemple, la résine adsorbante est une résine qui permet d'éliminer les hydrocarbures de la solution aqueuse, par exemple, la résine DOWEX OPTIPORE^{™} L493.

Dans un exemple, la résine anionique est une résine qui permet de piéger les polluants organiques naturels afin de réduire le potentiel de colmatage de la solution aqueuse, par exemple, une résine échangeuse d'anions fortement basique comprenant une matrice d'acrylique telle que la résine AMBERLITE^{™} IRA958.

Dans un exemple, le charbon actif est mis en oeuvre sous forme de filtre à charbon actif en grains. Outre son rôle d'adsorbant de polluants organiques solubles non ionisés, le filtre à charbon actif en grains joue également un rôle de support biologique. En effet, on observe des phénomènes de biodégradation qui s'ajoutent aux phénomènes purement physico-chimiques, ce qui permet d'allonger la durée de vie du filtre.
- le deuxième décontaminant est une résine échangeuse d'ions. Dans un exemple, la résine échangeuse d'ion est une résine qui permet de déminéraliser la solution aqueuse, par exemple, la résine AMBERLITE^{™} MB20.
- le premier décontaminant est disposé en amont du deuxième décontaminant, par référence à la direction de transfert de la solution aqueuse dans la ligne de purge. Par cette disposition, le deuxième décontaminant est protégé par le premier décontaminant. Ceci est particulièrement avantageux quand la solution aqueuse purgée est fortement contaminée par des polluants organiques comme, par exemple, des hydrocarbures.
- le moyen de décontamination comprend un troisième décontaminant apte à éliminer les polluants biologiques présents dans la solution aqueuse purgée. Ceci permet de décontaminer la solution aqueuse purgée de ses polluants biologiques avant de renvoyer la solution aqueuse purgée dans le réservoir.
- le système comprend un filtre configuré pour filtrer la solution aqueuse traversant la ligne de purge. Ceci permet de débarrasser la solution aqueuse purgée des substances solides et insolubles.
- le filtre est disposé en amont du premier décontaminant. Ceci permet de protéger le premier décontaminant des particules en suspension dans la solution aqueuse purgée.
- le premier décontaminant est contenu dans au moins une cartouche, de préférence, une cartouche amovible. Ceci permet de facilité la maintenance et le remplacement du premier décontaminant quand celui-ci est arrivé en fin de vie.
- le deuxième décontaminant est contenu dans au moins une cartouche, de préférence, une cartouche amovible. Ceci permet de facilité la maintenance et le remplacement du deuxième décontaminant quand celui-ci est arrivé en fin de vie.
- les premier et deuxième décontaminants sont contenus dans une même cartouche à étages, de préférence, une cartouche à étages amovible. Ceci permet, d'une part, de réduire l'encombrement du moyen de décontamination et, d'autre part, de facilité la maintenance et le remplacement du premier et/ou du deuxième décontaminant quand celui-ci est arrivé en fin de vie.
- la première pompe est une pompe d'injection de la solution aqueuse et la deuxième pompe est une pompe d'aspiration de la solution aqueuse. Ceci permet d'injecter la solution aqueuse dans la ligne d'injection et d'aspirer la solution aqueuse dans la ligne de purge.
- la pompe d'injection est également la pompe d'aspiration. Ceci permet de réduire le nombre de composants du système d'injection.
- la pompe d'injection et d'aspiration de la solution aqueuse est une pompe réversible.

Grâce à cette caractéristique, la solution aqueuse peut traverser sélectivement la ligne d'injection ou la ligne de purge.
- la pompe réversible est une pompe rotative et à sens de rotation réversible, par exemple, une pompe à engrenages. Ceci permet de contrôler avec précision le débit de la solution aqueuse dans la ligne d'injection et dans la ligne de purge.
- un moteur électrique réversible est couplé à la pompe réversible. Ceci permet d'entraîner la pompe réversible dans une direction ou dans l'autre.
- le moteur électrique réversible est commandé par une unité de contrôle électronique (ECU). Ceci permet de faire fonctionner la pompe réversible en fonction d'autres paramètres du véhicule automobile comme, par exemple, la température extérieure, la température du moteur, la pression dans la ligne d'injection, la vitesse du véhicule, etc.
- la pompe réversible est disposée à l'extérieur du réservoir. Ceci permet de faciliter l'accès à la pompe réversible pour des besoins de maintenance par exemple.
- la pompe réversible est disposée à l'intérieur du réservoir. Ceci permet de réduire le volume occupé par l'ensemble constitué du réservoir et de la pompe.
- la pompe réversible est disposée à travers une paroi du réservoir. Ceci permet de faciliter l'accès à la pompe réversible pour des besoins de maintenance par exemple, tout en réduisant le volume occupé par l'ensemble constitué du réservoir et de la pompe.
- la ligne de purge est également la ligne d'injection. Ceci permet de réduire le nombre de composants du système d'injection.
- la ligne de purge est distincte, au moins en partie, de la ligne d'injection. Grâce à cette caractéristique, la solution aqueuse injectée ne traverse pas le moyen de décontamination prévu pour la solution aqueuse purgée.
- la ligne de purge est reliée à la ligne d'injection par une vanne. Ceci permet d'isoler sélectivement la ligne de purge de la ligne d'injection.
- la vanne est une première vanne d'arrêt configurée pour coopérer avec une seconde vanne d'arrêt disposée dans la ligne d'injection, telles que :
- la première vanne d'arrêt est fermée et la seconde vanne d'arrêt est ouverte quand de la solution aqueuse est injectée, c'est-à-dire transférée à travers la ligne d'injection du réservoir à au moins un injecteur du moteur à injection,
- la première vanne d'arrêt est ouverte et la seconde vanne d'arrêt est fermée quand de la solution aqueuse est purgée, c'est-à-dire transférée à travers la ligne de purge d'au moins un injecteur du moteur à injection au réservoir.
- la première vanne d'arrêt, respectivement la seconde vanne d'arrêt, est un clapet anti-retour, de préférence, taré. Ceci permet d'isoler la ligne de purge de la ligne d'injection au moyen de composants simples et peu coûteux.
- la vanne est une électrovanne du type comprenant une première voie reliée à la ligne d'injection en amont d'une deuxième voie, elle-même reliée à la ligne d'injection, et une troisième voie reliée à la ligne de purge, telles que :
- les première et deuxième voies sont ouvertes et la troisième voie est fermée quand de la solution aqueuse est injectée,
- les première et troisième voies sont ouvertes et la deuxième voie est fermée quand de la solution aqueuse est purgée.

Ceci permet d'injecter et de purger sélectivement la solution aqueuse en fonction d'autres paramètres que la seule pression dans les lignes d'injection et de purge.
- l'électrovanne comprend un mécanisme d'ouverture/fermeture sélective des première, deuxième et troisième voies. Le mécanisme est un servomoteur électrique commandé par l'unité de contrôle électronique (ECU) pour :
- ouvrir les première et deuxième voies et fermer la troisième voie quand de la solution aqueuse est injectée,
- ouvrir les première et troisième voies et fermer la deuxième voie quand de la solution aqueuse est purgée.
- le système comprend un régulateur de pression configuré pour évacuer de la solution aqueuse injectée quand la pression dans la ligne d'injection est supérieure à un seuil prédéterminé. Ceci permet de réguler la pression dans la ligne d'injection. En effet, quand la pression de service du système est de 10 bar (seuil prédéterminé), en cas de surpression dans la ligne d'injection, on prévoit une évacuation de la solution aqueuse injectée. Une surpression peut résulter de la très faible fuite de la pompe réversible lorsqu'elle tourne à sa vitesse de service (800 tour/minute).
- le régulateur de pression consiste en une ligne d'évacuation d'une partie de la solution aqueuse injectée, vers le réservoir. Ceci permet de récupérer et de réutiliser la solution aqueuse évacuée.
- le système comprend un capteur de qualité dans le réservoir. Ce capteur permet, outre la mesure de la conductivité électrique, de vérifier que le produit qui est stocké dans le réservoir est bien une solution aqueuse et pas un autre produit comme par exemple une solution d'urée ou du carburant. Si tel était le cas, l'unité de contrôle électronique (ECU) en serait informée et empêcherait ce produit d'être injecté dans le moteur.
- le système comprend un moyen de chauffage apte à chauffer la ligne de purge. Ceci est particulièrement avantageux en hivers, quand il faut dégeler la solution aqueuse.
- le moyen de chauffage est choisi parmi un moyen de chauffage électrique et/ou un moyen de chauffage comportant un fluide caloporteur tel qu'un liquide de refroidissement du moteur ou un gaz d'échappement en provenance du moteur.

On prévoit aussi selon l'invention un procédé de purge d'une solution aqueuse dans un système d'injection de la solution aqueuse dans un moteur à injection pour véhicule automobile comprenant les étapes successives suivantes :
a) transférer à travers une ligne d'injection, de la solution aqueuse d'un réservoir à au moins un injecteur du moteur à injection,
b) transférer à travers une ligne de purge, de la solution aqueuse d'au moins un injecteur du moteur à injection au réservoir,
c) décontaminer la solution aqueuse traversant la ligne de purge par passage au travers d'un moyen de décontamination comprenant un premier décontaminant apte à éliminer les polluants organiques présents dans la solution aqueuse purgée.

Ainsi, grâce au procédé de purge selon l'invention, la solution aqueuse purgée est décontaminée de ses polluants organiques ce qui permet de renvoyer la solution aqueuse purgée dans le réservoir sans risquer de contaminer le réservoir et son contenu.

Selon une caractéristique additionnelle du procédé selon l'invention, le moyen de décontamination comprend un deuxième décontaminant apte à éliminer les polluants inorganiques présents dans la solution aqueuse purgée. Ceci permet de décontaminer la solution aqueuse purgée de ses polluants inorganiques avant de la renvoyer dans le réservoir.

Selon une caractéristique alternative du procédé selon l'invention, le moyen de décontamination comprend un seul décontaminant, à savoir ledit premier décontaminant.

### Brève description des dessins

On va maintenant décrire, à titre d'exemples non limitatifs, différents modes de réalisation de l'invention à l'aide des figures suivantes :
[Fig. 1] a figure 1 illustre un système d'injection d'une solution aqueuse dans un moteur à injection pour véhicule automobile selon un premier mode de réalisation de l'invention.
[Fig. 2] la figure 2 illustre un système d'injection d'une solution aqueuse dans un moteur à injection pour véhicule automobile selon un deuxième mode de réalisation de l'invention.
[Fig. 3] la figure 3 illustre un système d'injection d'une solution aqueuse dans un moteur à injection pour véhicule automobile selon un troisième mode de réalisation de l'invention.

### Description détaillée d'au moins un mode de réalisation de l'invention

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées et/ou interchangées pour fournir d'autres réalisations.

Dans la présente description, on peut indexer certains éléments ou paramètres, par exemple premier élément ou deuxième élément ainsi que premier paramètre et second paramètre ou encore premier critère et deuxième critère, etc. Dans ce cas, il s'agit d'un simple indexage pour différencier et dénommer des éléments ou paramètres ou critères proches mais non identiques. Cette indexation n'implique pas une priorité d'un élément, paramètre ou critère par rapport à un autre et on peut aisément interchanger de telles dénominations sans sortir du cadre de la présente description. Cette indexation n'implique pas non plus un ordre dans le temps par exemple pour apprécier tel ou tel critère.

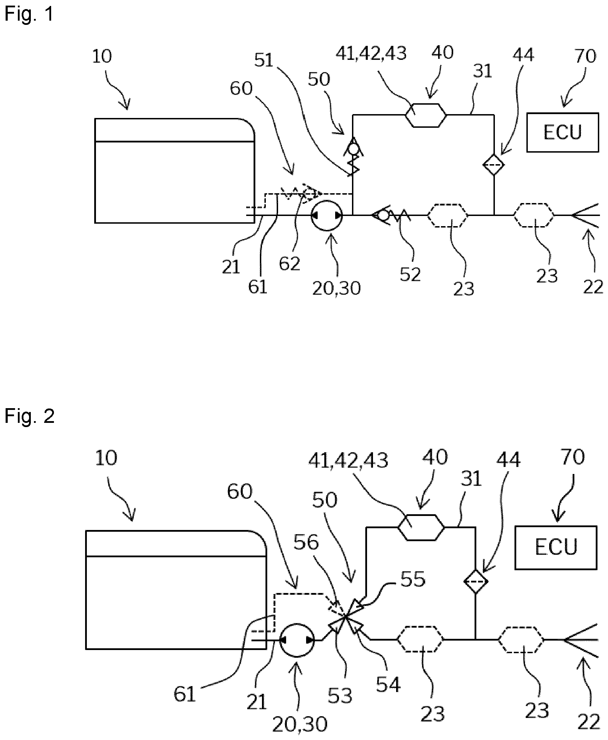

La figure 1 est une représentation schématique d'un système d'injection d'eau dans un moteur à injection pour véhicule automobile comprenant un réservoir d'eau 10, une première pompe 20 configurée pour transférer à travers une ligne d'injection 21, de l'eau dudit réservoir 10 à au moins un injecteur 22 du moteur à injection, une seconde pompe 30 configurée pour transférer à travers une ligne de purge 31, de l'eau dudit au moins un injecteur 22 du moteur à injection audit réservoir 10, et un moyen de décontamination 40 configuré pour décontaminer ladite eau traversant ladite ligne de purge. Ledit moyen de décontamination 40 comprenant un premier décontaminant 41 apte à éliminer les polluants organiques présents dans ladite eau purgée. Dans cet exemple particulier, ledit moyen de décontamination 40 comprend un deuxième décontaminant 42 apte à éliminer les polluants inorganiques présents dans ladite eau purgée. Dans une variante non représentée de l'invention, le moyen de décontamination comprend un seul décontaminant qui correspond au premier décontaminant.

Ledit premier décontaminant 41 contient un adsorbant choisi dans le groupe constitué par une résine adsorbante, une résine anionique, un charbon actif et toute combinaison de ces adsorbants.

Dans l'exemple, la résine adsorbante est une résine qui permet d'éliminer les hydrocarbures de l'eau, par exemple, la résine DOWEX OPTIPORE^{™} L493.

Dans l'exemple, la résine anionique est une résine qui permet de piéger les polluants organiques naturels afin de réduire le potentiel de colmatage de l'eau, par exemple, une résine échangeuse d'anions fortement basique comprenant une matrice d'acrylique telle que la résine AMBERLITE^{™} IRA958.

Dans l'exemple, le charbon actif est mis en oeuvre sous forme de filtre à charbon actif en grains. Outre son rôle d'adsorbant de polluants organiques solubles non ionisés, le filtre à charbon actif en grains joue également un rôle de support biologique. En effet, on observe des phénomènes de biodégradation qui s'ajoutent aux phénomènes purement physico-chimiques, ce qui permet d'allonger la durée de vie du filtre.

Ledit deuxième décontaminant 42 est une résine échangeuse d'ions. Dans l'exemple, la résine échangeuse d'ion est une résine qui permet de déminéraliser l'eau, par exemple, la résine AMBERLITE^{™} MB20.

Avantageusement, le premier décontaminant 41 est disposé en amont du deuxième décontaminant 42, par référence à la direction de transfert de l'eau dans la ligne de purge 31. Par cette disposition, le deuxième décontaminant 42 est protégé par le premier décontaminant 41.

Avantageusement, le moyen de décontamination 40 comprend un troisième décontaminant 43 apte à éliminer les polluants biologiques présents dans l'eau purgée.

Le système comprend en outre un filtre 44 configuré pour filtrer ladite eau traversant ladite ligne de purge 31.

Avantageusement, le filtre 44 est disposé en amont du premier décontaminant 41.

Le premier décontaminant 41, respectivement le deuxième décontaminant 42, est contenu dans au moins une cartouche, de préférence, une cartouche amovible.

Avantageusement, les premier 41 et deuxième 42 décontaminants sont contenus dans une même cartouche à étages. Ladite cartouche à étages est une cartouche comprenant au moins deux étages, un premier étage pour contenir le premier décontaminant 41 et un deuxième étage pour contenir le deuxième décontaminant 42. De préférence, ladite cartouche à étages est amovible.

Avantageusement, ladite première pompe 20 est une pompe d'injection de l'eau et ladite deuxième pompe 30 est une pompe d'aspiration de l'eau.

Avantageusement, ladite pompe d'injection est également ladite pompe d'aspiration.

Avantageusement, ladite pompe d'injection et d'aspiration de l'eau est une pompe réversible 20, 30.

La pompe réversible 20, 30 est une pompe rotative à sens de rotation réversible, par exemple une pompe à engrenages. Un moteur électrique réversible (non représenté) est couplé à la pompe réversible 20, 30. Le moteur électrique réversible est commandé par une unité 70 de contrôle électronique (ECU). Dans les exemples illustrés, la pompe réversible 20, 30 est disposée à l'extérieur du réservoir 10. Alternativement, la pompe réversible 20, 30 peut être disposée à l'intérieur du réservoir 10 ou à travers une paroi du réservoir 10 (non représenté).

Dans le mode de réalisation de la figure 1, ladite ligne de purge 31 est distincte, au moins en partie, de ladite ligne d'injection 21.

Avantageusement, ladite ligne de purge 31 est reliée à ladite ligne d'injection 21 par une vanne 50.

Ladite vanne 50 est une première vanne d'arrêt 51 configurée pour coopérer avec une seconde vanne d'arrêt 52 disposée dans la ligne d'injection, telles que :
- ladite première vanne d'arrêt 51 est fermée et ladite seconde vanne d'arrêt 52 est ouverte quand de l'eau est injectée,
- ladite première vanne d'arrêt 51 est ouverte et ladite seconde vanne d'arrêt 52 est fermée quand de l'eau est purgée.

La première vanne d'arrêt 51, respectivement la seconde vanne d'arrêt 52, est un clapet anti-retour, de préférence, taré à la pression de service. Dans l'exemple, la pression de service est 10 bar.

En option, l'eau injectée traverse un moyen de déminéralisation 23. Selon l'endroit où il est disposé sur la ligne d'injection 21, le moyen de déminéralisation 23 est traversé par l'eau purgée ou pas.

La figure 2 est une représentation schématique d'un système d'injection d'eau dans un moteur à injection pour véhicule automobile selon un deuxième mode de réalisation de l'invention dans lequel ladite vanne 50 est une électrovanne du type comprenant une première voie 53 reliée à ladite ligne d'injection 21 en amont d'une deuxième voie 54, elle-même reliée à ladite ligne d'injection 21, et une troisième voie 55 reliée à ladite ligne de purge 31, telles que :
- lesdites première 53 et deuxième 54 voies sont ouvertes et ladite troisième voie 55 est fermée quand de l'eau est injectée,
- lesdites première 53 et troisième 55 voies sont ouvertes et ladite deuxième voie 54 est fermée quand de l'eau est purgée.

L'électrovanne comprend un mécanisme d'ouverture/fermeture sélective des première 53, deuxième 54 et troisième 55 voies. Ledit mécanisme est un servomoteur électrique commandé par l'unité 70 de contrôle électronique (ECU) pour :
- ouvrir les première 53 et deuxième 54 voies et fermer la troisième voie 55 quand de l'eau est injectée,
- ouvrir les première 53 et troisième 55 voies et fermer la deuxième voie 54 quand de l'eau est purgée.

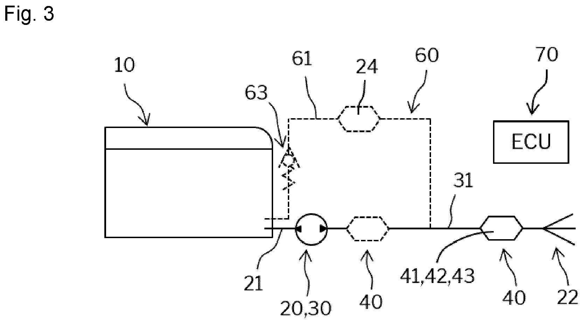

La figure 3 est une représentation schématique d'un système d'injection d'eau dans un moteur à injection pour véhicule automobile selon un troisième mode de réalisation de l'invention dans lequel la ligne de purge 31 est également la ligne d'injection 21.

Comme illustrés aux figures 1 à 3, le système comprend, en option, un régulateur de pression 60 configuré pour évacuer de l'eau injectée quand la pression dans ladite ligne d'injection 21 est supérieure à un seuil prédéterminé, par exemple, 10 bar.

Avantageusement, ledit régulateur de pression 60 consiste en une ligne d'évacuation 61 d'une partie de l'eau injectée, vers ledit réservoir 10.

Dans le premier mode de réalisation de l'invention (voir figure 1), une vanne d'arrêt 62 du type clapet anti-retour est disposé dans la ligne d'évacuation 61. Le clapet anti-retour est taré à la pression de service.

Dans le deuxième mode de réalisation de l'invention (voir figure 2), l'électrovanne comprend une quatrième voie 56 reliée à la ligne d'évacuation 61, telles que lesdites première 53, deuxième 54 et quatrième 56 voies sont ouvertes et ladite troisième voie 55 est fermée quand de l'eau est injectée.

Dans le troisième mode de réalisation de l'invention (voir figure 3), une vanne d'arrêt 63 du type clapet anti-retour est disposé dans la ligne d'évacuation 61. Le clapet anti-retour est taré à la pression de service. De plus, quand une partie de l'eau injectée est évacuée vers le réservoir 10, on peut prévoir que cette eau évacuée traverse ou pas le moyen de décontamination 40. En effet, si on veut que l'eau évacué traverse le moyen de décontamination 40, il suffit de disposer ledit moyen de décontamination 40 dans la ligne d'injection 21, en amont de l'intersection de la ligne d'injection 21 et la ligne d'évacuation 61 (voir l'illustration du moyen de décontamination 40 en trait interrompu). Au contraire, si on ne veut pas que l'eau évacué traverse le moyen de décontamination 40, il suffit de disposer ledit moyen de décontamination 40 dans la ligne d'injection 21, en aval de l'intersection de la ligne d'injection 21 et la ligne d'évacuation 61 (voir l'illustration du moyen de décontamination 40 en trait continu). Dans le cas où l'eau évacué ne traverse pas le moyen de décontamination 40, on peut prévoir que l'eau évacué traverse un moyen de déminéralisation 24 disposé dans la ligne d'évacuation 61.

L'invention s'applique également à un procédé de purge de l'eau dans un système d'injection de ladite eau dans un moteur à injection pour véhicule automobile comprenant les étapes successives suivantes :
a) transférer à travers une ligne d'injection, de l'eau d'un réservoir à au moins un injecteur du moteur à injection,
b) transférer à travers une ligne de purge, de l'eau d'au moins un injecteur du moteur à injection au réservoir,
c) décontaminer l'eau traversant ladite ligne de purge par passage au travers d'un moyen de décontamination comprenant un premier décontaminant apte à éliminer les polluants organiques présents dans l'eau purgée.

Ainsi, le procédé de purge selon l'invention permet de protéger le réservoir et son contenu de tout contaminant organique susceptible de se trouver dans l'eau purgée.

Dans un exemple particulier, le moyen de décontamination comprend un deuxième décontaminant apte à éliminer les polluants inorganiques présents dans l'eau purgée.

## Revendications

1. Système d'injection d'une solution aqueuse dans un moteur à injection pour véhicule automobile comprenant :
• un réservoir (10) d'une solution aqueuse,
• une première pompe (20) configurée pour transférer à travers une ligne d'injection (21), de la solution aqueuse dudit réservoir (10) à au moins un injecteur (22) du moteur à injection,
• une seconde pompe (30) configurée pour transférer à travers une ligne de purge (31), de la solution aqueuse dudit au moins un injecteur (22) du moteur à injection audit réservoir (10),
• un moyen de décontamination (40) configuré pour décontaminer ladite solution aqueuse traversant ladite ligne de purge, ledit moyen de décontamination (40) comprenant un premier décontaminant (41) apte à éliminer les polluants organiques présents dans ladite solution aqueuse purgée.

2. Système d'injection selon la revendication 1, **caractérisé en ce que** ledit moyen de décontamination (40) comprend un deuxième décontaminant (42) apte à éliminer les polluants inorganiques présents dans ladite solution aqueuse purgée.

3. Système d'injection selon la revendication 1, **caractérisé en ce que** ledit moyen de décontamination (40) comprend un seul décontaminant, à savoir ledit premier décontaminant (41).

4. Système d'injection selon l'une quelconque des revendications 1 à 3, **caractérisé en ce que** ledit premier décontaminant (41) contient un adsorbant choisi dans le groupe constitué par une résine adsorbante, une résine anionique, un charbon actif et toute combinaison de ces adsorbants.

5. Système d'injection selon la revendication 2 prise seule ou en combinaison avec la revendication 4, **caractérisé en ce que** ledit deuxième décontaminant (42) est une résine échangeuse d'ions.

6. Système d'injection selon l'une quelconque des revendications 1 à 5, **caractérisé en ce qu'**il comprend un filtre (44) configuré pour filtrer ladite solution aqueuse traversant ladite ligne de purge (31).

7. Système d'injection selon l'une quelconque des revendications 1 à 6, **caractérisé en ce que** ladite première pompe (20) est une pompe d'injection de la solution aqueuse et ladite deuxième pompe (30) est une pompe d'aspiration de la solution aqueuse, et **en ce que** ladite pompe d'injection est également ladite pompe d'aspiration, et **en ce que** ladite pompe d'injection et d'aspiration de la solution aqueuse est une pompe réversible (20, 30).

8. Système d'injection selon l'une quelconque des revendications 1 à 7, **caractérisé en ce que** ladite ligne de purge (31) est distincte, au moins en partie, de ladite ligne d'injection (21), et **en ce que** ladite ligne de purge (31) est reliée à ladite ligne d'injection (21) par une vanne (50).

9. Système d'injection selon la revendication 8, **caractérisé en ce que** ladite vanne (50) est une première vanne d'arrêt (51) configurée pour coopérer avec une seconde vanne d'arrêt (52) disposée dans la ligne d'injection, telles que :
• ladite première vanne d'arrêt (51) est fermée et ladite seconde vanne d'arrêt (52) est ouverte quand de la solution aqueuse est injectée,
• ladite première vanne d'arrêt (51) est ouverte et ladite seconde vanne d'arrêt (52) est fermée quand de la solution aqueuse est purgée.

10. Système d'injection selon la revendication 8, **caractérisé en ce que** ladite vanne (50) est une électrovanne du type comprenant une première voie (53) reliée à ladite ligne d'injection (21) en amont d'une deuxième voie (54) elle-même reliée à ladite ligne d'injection (21), et une troisième voie (55) reliée à ladite ligne de purge (31), telles que :
• lesdites première (53) et deuxième (54) voies sont ouvertes et ladite troisième voie (55) est fermée quand de la solution aqueuse est injectée,
• lesdites première (53) et troisième (55) voies sont ouvertes et ladite deuxième voie (54) est fermée quand de la solution aqueuse est purgée.

11. Système d'injection selon l'une quelconque des revendications 1 à 10, **caractérisé en ce qu'**il comprend un régulateur de pression (60) configuré pour évacuer de la solution aqueuse injectée quand la pression dans ladite ligne d'injection (21) est supérieure à un seuil prédéterminé.

12. Système d'injection selon la revendication 11, **caractérisé en ce que** ledit régulateur de pression (60) consiste en une ligne d'évacuation (61) d'une partie de la solution aqueuse injectée, vers ledit réservoir (10).

13. Procédé de purge d'une solution aqueuse dans un système d'injection de ladite solution aqueuse dans un moteur à injection pour véhicule automobile comprenant les étapes successives suivantes :
a) transférer à travers une ligne d'injection (21), de la solution aqueuse d'un réservoir (10) à au moins un injecteur (22) du moteur à injection,
b) transférer à travers une ligne de purge (31), de la solution aqueuse dudit au moins un injecteur (22) du moteur à injection audit réservoir (10),
c) décontaminer ladite solution aqueuse traversant ladite ligne de purge (31) par passage au travers d'un moyen de décontamination (40) comprenant un premier décontaminant (41) apte à éliminer les polluants organiques présents dans ladite solution aqueuse purgée.

14. Procédé de purge selon la revendication 13, **caractérisé en ce que** ledit moyen de décontamination (40) comprend un deuxième décontaminant (42) apte à éliminer les polluants inorganiques présents dans ladite solution aqueuse purgée.

15. Procédé de purge selon la revendication 13, **caractérisé en ce que** ledit moyen de décontamination (40) comprend un seul décontaminant, à savoir ledit premier décontaminant (41).

## Patentansprüche

1. System zum Einspritzen einer wässrigen Lösung in einen Einspritzmotor für Kraftfahrzeug, umfassend:
• einen Tank (10) für eine wässrige Lösung,
• eine erste Pumpe (20), die eingerichtet ist, um durch eine Einspritzleitung (21) hindurch wässrige Lösung aus dem Tank (10) zu wenigstens einer Einspritzdüse (22) des Einspritzmotors hin zu leiten,
• eine zweite Pumpe (30), die eingerichtet ist, um durch eine Spülleitung (31) hindurch wässrige Lösung aus der wenigstens einen Einspritzdüse (22) des Einspritzmotors zu dem Tank (10) hin zu leiten,
• eine Reinigungseinrichtung (40), die eingerichtet ist, um die wässrige Lösung, die die Spülleitung durchfließt, zu reinigen, wobei die Reinigungseinrichtung (40) ein erstes Reinigungsmittel (41) umfasst, das imstande ist, die in der gespülten wässrigen Lösung vorhandenen organischen Verunreinigungen zu entfernen.

2. Einspritzsystem nach Anspruch 1, **dadurch gekennzeichnet, dass** die Reinigungseinrichtung (40) ein zweites Reinigungsmittel (42) umfasst, das imstande ist, die in der gespülten wässrigen Lösung vorhandenen anorganischen Verunreinigungen zu entfernen,

3. Einspritzsystem nach Anspruch 1, **dadurch gekennzeichnet, dass** die Reinigungseinrichtung (40) ein einziges Reinigungsmittel umfasst, das heißt das erste Reinigungsmittel (41).

4. Einspritzsystem nach einem der Ansprüche 1 bis 3, **dadurch gekennzeichnet, dass** das erste Reinigungsmittel (41) ein Adsorptionsmittel enthält, das ausgewählt ist aus der Gruppe bestehend aus einem Adsorberharz, einem anionischem Harz und jeder beliebigen Kombination dieser Adsorptionsmittel.

5. Einspritzsystem nach Anspruch 2 allein oder in Kombination mit Anspruch 4, **dadurch gekennzeichnet, dass** das zweite Reinigungsmittel (42) ein Ionenaustauscherharz ist.

6. Einspritzsystem nach einem der Ansprüche 1 bis 5, **dadurch gekennzeichnet, dass** es einen Filter (44) umfasst, der eingerichtet ist, um die wässrige Lösung, die die Spülleitung (31) durchfließt, zu filtern.

7. Einspritzsystem nach einem der Ansprüche 1 bis 6, **dadurch gekennzeichnet, dass** die erste Pumpe (20) eine Pumpe zum Einspritzen der wässrigen Lösung ist und die zweite Pumpe (30) eine Pumpe zum Ansaugen der wässrigen Lösung ist, und dadurch, dass die Einspritzpumpe auch die Ansaugpumpe ist, und dadurch, dass die Pumpe zum Einspritzen und zum Ansaugen der wässrigen Lösung eine reversible Pumpe (20, 30) ist.

8. Einspritzsystem nach einem der Ansprüche 1 bis 7, **dadurch gekennzeichnet, dass** die Spülleitung (31), zumindest zum Teil, von der Einspritzleitung (21) verschieden ist, und dadurch, dass die Spülleitung (31) mit der Einspritzleitung (21) durch ein Ventil (50) verbunden ist.

9. Einspritzsystem nach Anspruch 8, **dadurch gekennzeichnet, dass** das Ventil (50) ein erstes Absperrventil (51) ist, das für das Zusammenwirken mit einem zweiten Absperrventil (52) das in der Einspritzleitung angeordnet ist, eingerichtet ist, dergestalt, dass:
• das erste Absperrventil (51) geschlossen ist und das zweite Absperrventil (52) geöffnet ist, wenn die wässrige Lösung eingespritzt wird,
• das erste Absperrventil (51) geöffnet ist und das zweite Absperrventil (52) geschlossen ist, wenn die wässrige Lösung gespült wird.

10. Einspritzsystem nach Anspruch 8, **dadurch gekennzeichnet, dass** das Ventil (50) ein Magnetventil des Typs ist, umfassend einen ersten Weg (53), der mit der Einspritzleitung (21) stromaufwärts eines zweiten Weges (54) verbunden ist, der seinerseits mit der Einspritzleitung (21) verbunden ist, und einen dritten Weg (55), der mit der Spülleitung (31) verbunden ist, dergestalt, dass:
• der erste Weg (53) und der zweite Weg (54) geöffnet sind und der dritte Weg (55) geschlossen ist, wenn die wässrige Lösung eingespritzt wird,
• der erste Weg (53) und der dritte Weg (55) geöffnet sind und der zweite Weg (54) geschlossen ist, wenn die wässrige Lösung gespült wird.

11. Einspritzsystem nach einem der Ansprüche 1 bis 10, **dadurch gekennzeichnet, dass** es einen Druckregler (60) umfasst, der eingerichtet ist, um eingespritzte wässrige Lösung abzulassen, wenn der Druck in der Einspritzleitung (21) größer ist als eine vorbestimmter Schwellwert.

12. Einspritzsystem nach Anspruch 11, **dadurch gekennzeichnet, dass** der Druckregler (60) aus einer Leitung (61) zum Ablassen eines Teils der eingespritzten wässrigen Lösung zu dem Tank (10) hin besteht.

13. Verfahren zum Spülen einer wässrigen Lösung in einem System zum Einspritzen der wässrigen Lösung in einen Einspritzmotor für Kraftfahrzeug, umfassend die folgenden aufeinanderfolgenden Schritte:
a) Leiten, durch eine Einspritzleitung (21) hindurch, von wässriger Lösung aus einem Tank (10) zu wenigstens einer Einspritzdüse (22) des Einspritzmotors hin,
b) Leiten, durch eine Spülleitung (31) hindurch, von wässriger Lösung aus der wenigstens einen Einspritzdüse (22) des Einspritzmotors zu dem Tank (10) hin,
c) Reinigen der wässrigen Lösung, die die Spülleitung (31) durchfließt, durch Passieren einer Reinigungseinrichtung (40), die ein erstes Reinigungsmittel (41) umfasst, das imstande ist, die in der gespülten wässrigen Lösung vorhandenen organischen Verunreinigungen zu entfernen.

14. Spülverfahren nach Anspruch 13, **dadurch gekennzeichnet, dass** die Reinigungseinrichtung (40) ein zweites Reinigungsmittel (42) umfasst, das imstande ist, die in der gespülten wässrigen Lösung vorhandenen anorganischen Verunreinigungen zu entfernen.

15. Spülverfahren nach Anspruch 13, **dadurch gekennzeichnet, dass** die Reinigungseinrichtung (40) ein einziges Reinigungsmittel umfasst, das heißt das erste Reinigungsmittel (41).

## Claims

1. An injection system for injecting an aqueous solution into a fuel-injected engine for automotive vehicle comprising:
• a tank (10) for an aqueous solution,
• a first pump (20) configured to transfer through an injection line (21), aqueous solution from said tank (10) to at least one injector (22) of the fuel-injected engine,
• a second pump (30) configured to transfer through a purge line (31), aqueous solution from said at least one injector (22) of the fuel-injected engine to said tank (10),
• decontamination means (40) configured to decontaminate said aqueous solution passing through said purge line, said decontamination means (40) comprising a first decontaminant (41) capable of removing the organic contaminants present in said purged aqueous solution.

2. The injection system according to claim 1, **characterized in that** said decontamination means (40) comprises a second decontaminant (42) capable of removing the inorganic contaminants present in said purged aqueous solution.

3. The injection system according to claim 1, **characterized in that** said decontamination means (40) comprises a single decontaminant, namely said first decontaminant (41).

4. The injection system according to any one of claims 1 to 3, **characterized in that** said first decontaminant (41) contains an adsorbent selected from the group consisting of an adsorbent resin, an anionic resin, an activated carbon and any combination of these adsorbents.

5. The injection system according to claim 2 taken alone or in combination with claim 4, **characterized in that** said second decontaminant (42) is an ion exchange resin.

6. The injection system according to any one of claims 1 to 5, **characterized in that** it comprises a filter (44) configured to filter said aqueous solution passing through said purge line (31).

7. The injection system according to any one of claims 1 to 6, **characterized in that** said first pump (20) is an injection pump for injecting the aqueous solution and said second pump (30) is a suction pump for suction of the aqueous solution, and **in that** said injection pump is also said suction pump, and **in that** said injection and suction pump for injection and suction of the aqueous solution is a reversible pump (20, 30).

8. The injection system according to any one of claims 1 to 7, **characterized in that** said purge line (31) is distinct, at least in part, from said injection line (21), and **in that** said purge line (31) is connected to said injection line (21) by a valve (50).

9. The injection system according to claim 8, **characterized in that** said valve (50) is a first shut-off valve (51) configured to cooperate with a second shut-off valve (52) disposed in the injection line, such as:
• said first shut-off valve (51) is closed and said second shut-off valve (52) is opened when aqueous solution is injected,
• said first shut-off valve (51) is open and said second shut-off valve (52) is closed when aqueous solution is purged.

10. The injection system according to claim 8, **characterized in that** said valve (50) is a solenoid valve of the type comprising a first channel (53) connected to said injection line (21) upstream of a second channel (54) which is itself connected to said injection line (21), and a third channel (55) connected to said purge line (31), such as:
• said first (53) and second (54) channels are open and said third channel (55) is closed when aqueous solution is injected,
• said first (53) and third (55) channels are open and said second channel (54) is closed when aqueous solution is purged.

11. The injection system according to any one of claims 1 to 10, **characterized in that** it comprises a pressure regulator (60) configured to discharge injected aqueous solution when the pressure in said injection line (21) is above a predetermined threshold.

12. The injection system according to claim 11, **characterized in that** said pressure regulator (60) consists of a discharge line (61) of a portion of the injected aqueous solution to said reservoir (10).

13. A purging method for purging an aqueous solution in an injection system for injecting said aqueous solution into a fuel-injected engine for automotive vehicle comprising the following successive steps:
a) transferring through an injection line (21), aqueous solution from a tank (10) to at least one injector (22) of the fuel-injected engine,
b) transfer through a purge line (31), aqueous solution from said at least one injector (22) of the fuel-injected engine to said tank (10),
c) decontaminate said aqueous solution passing through said purge line (31) by passing through decontamination means (40) including a first decontaminant (41) capable of removing the organic contaminants present in said purged aqueous solution.

14. The purging process according to claim 13, **characterized in that** said decontamination means (40) comprises a second decontaminant (42) capable of removing inorganic contaminants present in said purged aqueous solution.

15. The purge process according to claim 13, **characterized in that** said decontamination means (40) comprises a single decontaminant, namely said first decontaminant (41).
